# EUROPEAN PATENT SPECIFICATION

(11) **EP 3 857 277 B1**
(45) Date of publication and mention of the grant of the patent: **14.08.2024**
(21) Application number: 19866027.6
(22) Date of filing: 24.09.2019
(51) Int. Cl.: G02F 1/155

(54) **ELECTROACTIVE DEVICE AND METHODS**
ELEKTROAKTIVE VORRICHTUNG UND VERFAHREN
DISPOSITIF ÉLECTROACTIF ET PROCÉDÉS

(30) Priority: 26.09.2018 US 201862736918 P
(43) Date of publication of application: 04.08.2021
(73) Proprietor: Sage Electrochromics, Inc., Faribault, Minnesota 55021 (US)
(72) Inventor: SARRACH, Sebastian Marius, Lakeville, Minnesota 55044 (US); LAWSON, Nathaniel James, Faribault, Minnesota 55021 (US)
(74) Representative: Zimmermann & Partner Patentanwälte mbB
(86) International application number: PCT/US2019/052676
(87) International publication number: WO 2020/068813

(56) References cited:
- US-A1- 2004 070 336
- US-A1- 2007 131 278
- US-A1- 2007 141 360
- US-A1- 2010 203 296
- US-A1- 2015 108 102
- US-A1- 2015 131 140
- US-A1- 2016 168 396
- US-A1- 2017 130 523
- US-A1- 2017 130 523
- US-A1- 2017 160 619

## Description

### TECHNICAL FIELD

The present disclosure relates to electroactive devices, which are switchable between a bleached state and a tinted state or between two or more tinted states, and to a method of repairing those electroactive devices.

### BACKGROUND ART

Electroactive devices can be used in a variety of applications to provide adjustable light transmission. Electroactive devices are commonly contained in insulated glass units to permit controllable light transmission in buildings.

Electroactive devices can include defects due to manufacturing issues, problems during installation, and operational defects which can occur during the lifetime of the device. In particular, some electroactive devices include small defects, sometimes referred to as pinhole defects, where light transmission properties are different than in the remainder of the electroactive device. Such defects can be visible, particularly at certain tinted states.

Methods of repairing electrochromic devices with local defects are disclosed in US2007141360 A1, US2016168396 A1, US2015108102 A1 and US2015131140 A1. A method of repairing an electroluminescent display is disclosed in US2004070336 A1. Methods of removing portions of an electrode layer in electrochromic devices are disclosed in US2017130523 A1 and US2017130319 A1.

Industries using electroactive devices continue to demand improved methods of repairing defects in electroactive devices to mitigate visible detection of the defect and improve aesthetic quality of the electroactive device. Additionally, industries using electroactive devices continue to demand improved electroactive performance and electroactive devices capable of producing new characteristics and qualities.

### BRIEF DESCRIPTION OF THE DRAWINGS

Embodiments are illustrated by way of example and are not intended to be limited in the accompanying figures.
FIG. 1 includes a cross-sectional view of an electroactive device including a mitigated area in accordance with an embodiment.
FIG. 2 includes a top view of an electroactive device including a mitigated area in accordance with an embodiment and a traditionally repaired pinhole defect.
FIG. 3 includes a flow chart of a method of repairing a defect in an electroactive device in accordance with an embodiment.
FIG. 4 includes an image of a mitigated area in accordance with an embodiment as viewed from a Scanning Electron Microscope.

### DETAILED DESCRIPTION OF THE PREFERRED EMBODIMENT(S)

The following description in combination with the figures is provided to assist in understanding the teachings disclosed herein. The following discussion will focus on specific implementations and embodiments of the teachings. This focus is provided to assist in describing the teachings and should not be interpreted as a limitation on the scope or applicability of the teachings. However, other embodiments can be used based on the teachings as disclosed in this application.

The terms "comprises," "comprising," "includes," "including," "has," "having" or any other variation thereof, are intended to cover a non-exclusive inclusion. For example, a method, article, or apparatus that comprises a list of features is not necessarily limited only to those features but may include other features not expressly listed or inherent to such method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" is employed to describe elements and components described herein. This is done merely for convenience and to give a general sense of the scope of the invention. This description should be read to include one, at least one, or the singular as also including the plural, or vice versa, unless it is clear that it is meant otherwise. For example, when a single item is described herein, more than one item may be used in place of a single item. Similarly, where more than one item is described herein, a single item may be substituted for that more than one item.

Unless otherwise defined, all technical and scientific terms used herein have the same meaning as commonly understood by one of ordinary skill in the art to which this invention belongs. The materials, methods, and examples are illustrative only and not intended to be limiting. To the extent not described herein, many details regarding specific materials and processing acts are conventional and may be found in textbooks and other sources within the electroactive arts.

In accordance with a particular aspect of the present invention, an electroactive device as defined in claim 1 is provided. The electroactive device includes a stack defining a first electrode, a second electrode, and an electroactive layer disposed between the first and second electrodes. The stack includes a mitigated area essentially free of material corresponding with the first electrode and at least a portion of the second electrode and electroactive layer, as contained in the mitigated area, are functional. In a particular instance, the entire area of the second electrode and an entire area of the electroactive layer, as measured in the mitigated area, can be functional.

The mitigated area defines a perimeter. In an embodiment, a current flow path between the first and second electrodes can pass through the perimeter of the mitigated area. In another embodiment, current flow within the mitigated area can be angularly offset from a direction normal with the stack. For example, the angular offset of the current flow within the mitigated area can be at least 0.5°, at least 1°, at least 2°, at least 3°, at least 4°, at least 5°, at least 8°, or at least 10°.

In certain instances, the electroactive device can define a tint gradient. The tint gradient can occur within the mitigated area when the electroactive device is in a tinted state. In a more particular embodiment, the tint gradient can define a minimum tint and a maximum tint. In yet a more particular embodiment, the minimum tint can be disposed closer to a central region of the mitigated are as compared to the maximum tint.

In the present invention, the first electrode defines a surface abutting the mitigated area, the surface having a curved, or otherwise non-linear profile. For example, the surface can taper or include an arcuate or multi-planar cross-sectional shape.

In certain instances, a tint time of the electroactive device can be greater in the mitigated area as compared to an area of the electroactive device adjacent the mitigated area. As used herein, "tint time" can refer to a duration of time corresponding with a transition from a first tinted state to a second tinted state. More particularly, "tint time" can refer to the duration of time required to transition completely, or substantially completely, from the first tinted state to the second tinted state.

In an embodiment, the mitigated area can have an oblong, or generally oblong, shape when viewed in a direction normal to the stack. In another embodiment, the mitigated area can have a circular, or generally circular, shape when viewed in a direction normal to the stack.

In another aspect of the present invention, a method of repairing an electroactive device as defined in claim 9 is provided. The method includes locating a defect in an electroactive device and removing a first electrode from a stack of the electroactive device at a location corresponding with the defect. The resulting mitigated area corresponds with the location of the defect and is essentially free of material corresponding with the first electrode, wherein an electroactive layer of the stack and a second electrode of the stack remain functional within the mitigated area.

In an embodiment, removing the first electrode can be performed with a full spectrum laser. In a more particular embodiment, the laser is operated with pulse duration between 200 fs and 1500 fs, between 250 fs and 1250 fs, or between 300 fs and 1000 fs. In the present invention, the laser is operated with a wavelength between 450 nm and 600 nm, preferably between 500 nm and 550 nm, or between 510 nm and 525 nm. In yet a further embodiment, the laser is operated with a wavelength of approximately 515 nm.

In an embodiment, the method can further include operating the electroactive device after removing the first electrode at the mitigated area. In certain instances, operating the electroactive device can create a tint gradient at the mitigated area.

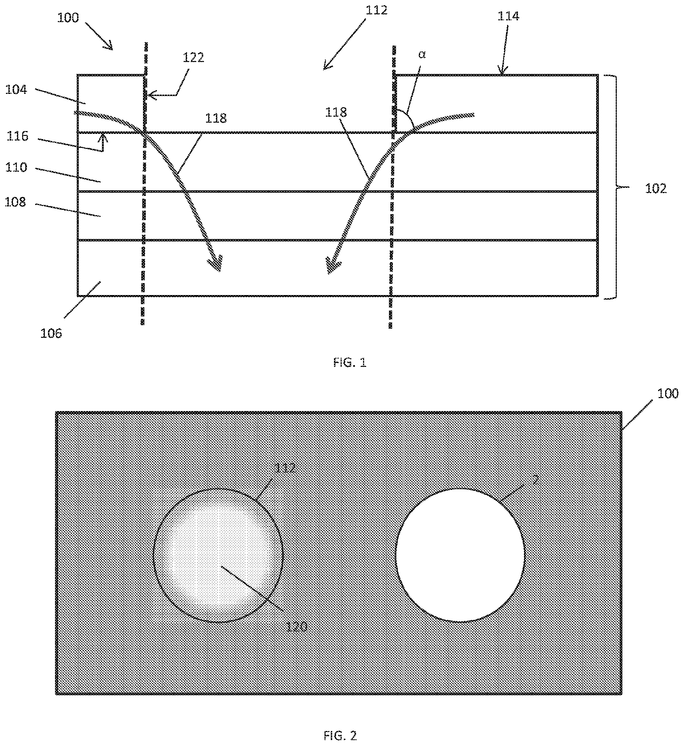

FIG. 1 includes a cross-sectional view of an electroactive device 100 including a stack 102 defining a first electrode 104 and a second electrode 106. An electroactive layer 108 is disposed between the first and second electrodes 104 and 106. In an embodiment, the electroactive layer 108 can be spaced apart from at least one of the first and second electrodes 104 and 106 by an intermediary layer, such as an ion storage layer 110 (also referred to as a counter electrode layer). In an embodiment, the electroactive device 100 can include an electrochromic device. In a more particular embodiment, the electroactive device 100 can include a solid state electrochromic device.

A mitigated area 112 within the stack 102 is illustrated by an area located between dashed lines in FIG. 1. In an embodiment, the mitigated area 112 can have a reduced operational capacity as compared to the remainder of the electroactive device 100. In an embodiment, reduced operational capacity can refer to a functional or nonfunctional area of the electroactive device 100 with mitigated tinting ability. For example, when the electroactive device 100 is tinted to X%, the mitigated area 112 can have a tint of [X-Y]% where Y is at least 0.01, at least 0.1, or at least 1. It is noted that Y is generally less than X.

In an embodiment, the mitigated area 112 can correspond with an area of the electroactive device 100 associated with one or more defects, such as one or more pinhole defects, in the electroactive device 100. In an embodiment, the mitigated area 112 can correspond with an area of the electroactive device 100 associated with an electrical short. The mitigated area can be defined by an areal size of the mitigated area 112, as measured when viewed normal to the stack 102.

In the present invention, the mitigated area 112 is essentially free of material corresponding with the first electrode 104. The first electrode 104 can define an upper surface 114 and a lower surface 116. In an embodiment, a mitigated area 112 essentially free of material corresponding with the first electrode 104 can refer to a condition whereby material of the first electrode 104 occupies no greater than 5% of the volume within the mitigated area 112, as measured between the upper and lower surfaces 114 and 116 of the first electrode 104. Thus, for example, a 0.1 mm² mitigated area 112 essentially free of material corresponding with the first electrode 104 contains no greater than 5% of the first electrode 104 by volume within the 0.1 mm² area, as measured between the upper and lower surfaces 114 and 116 of the first electrode 104. In a more particular embodiment, essentially free of material corresponding with the first electrode 104 can refer to a volume of no greater than 4%, no greater than 3%, no greater than 2%, or no greater than 1%. In yet a more particular embodiment, the volume of first electrode material in the mitigated area 112 can be less than 0.5%, or less than 0.1%. In a particular instance, the first electrode material can occupy 0% of the volume within the mitigated area 112, as measured between the upper and lower surfaces 114 and 116 of the first electrode 104.

In an embodiment, the mitigated area 112 can be free, or generally free, of melted portions of the first electrode 104. In another embodiment, the mitigated area 112 can be free, or generally free, of mixed portions of the first electrode 104. In a more particular embodiment, the mitigated area 112 can define a void having a depth generally equal to the thickness of the first electrode 104.

In an embodiment, the electroactive device 100 is functional in the mitigated area 112. In the present invention, at least a portion, such as all, of the second electrode 106 and electroactive layer 108, as contained in the mitigated area 112, are functional. As used herein, "functional" can refer to a condition whereby the electroactive device 100 can display electroactivism. More particularly, "functional" areas can transition between different tinted states. To the contrary, "non-functional" devices are areas no longer displaying electroactivism. Thus, for example, a non-functional area of an electroactive device remains bleached while the functional areas of the electroactive device can be tinted by varying amounts.

In an embodiment, current flow from the first electrode 104 to the second electrode 106 (illustrated in FIG. 1 by line 118) can pass through a perimeter (generally represented by dashed lines) of the mitigated area 112. In an embodiment, the current flow 118 from the first electrode 104 to the second electrode 106 can be angularly offset from a direction normal with the stack 102. That is, for example, the current flow 118 can be angularly offset by an angle, α, of at least 1°, at least 2°, at least 3°, at least 4°, at least 5°, at least 8°, at least 10°, at least 15°, at least 20°, at last 25°, at least 30°, or at least 35°. In an embodiment, the angle, α, is no greater than 89°. In certain instances, the angle, α, can be in a range of 1° and 89°, in a range of 5° and 80°, in a range of 10° and 60°, in a range 15° and 45°, or in a range of 20° and 30°. In certain instances, the angular offset of the current flow is measured at the perimeter of the mitigated area 112. In other instances, the angular offset of the current flow is measured within the electroactive layer 108, the ion storage layer 110, the first or second electrodes 104 or 106, or any combination thereof.

In an embodiment, current flow 118 from the first electrode 104 can enter the second electrode 106 within the mitigated area 112. While FIG. 1 illustrates two lines representing current flow 118, effective current flow can be generally continuous around the perimeter of the mitigated area 112. That is, for example, referring to FIG. 2, the mitigated area 112 can have a generally homogeneous current flow gradient as measured around the entire perimeter thereof, illustrated by a generally rotationally symmetrical tint gradient (described in greater detail below).

Traditional defect repair involves forming a void through an entire thickness of an electroactive stack, thereby isolating the defect completely from the remaining electroactive layer. In such a manner, traditionally repaired defects leave areas exhibiting different properties as compared to the rest of the electroactive device. More specifically, traditionally repaired defects result in areas that remain entirely bleached when the electroactive device is tinted. An exemplary repair 2 using traditional methods is illustrated in FIG. 2. The repair 2 leaves a bleached portion .

In certain instances, the mitigated area 112 in accordance with embodiments described herein can define a tint gradient when the electroactive device 100 is in the tinted state (i.e., not bleached). That is, for example, the electroactive device 100 can include a maximum tint and a minimum tint, as observed in the mitigated area 112. In an embodiment, the minimum tint can be disposed closer to a central region 120 of the mitigated area 112 as compared to the maximum tint. In another embodiment, the maximum tint is disposed closer to the perimeter of the mitigated area 112 as compared to the minimum tint. In certain instances, the maximum tint of the mitigated area 112 can be generally the same as the tint of the remaining electroactive device 100. More particularly, the maximum tint of the mitigated area 112 can be generally the same as the tint immediately adjacent to the mitigated area 112.

In an embodiment, at least 1% of the mitigated area 112 can display electroactivism when the electroactive device 100 is in a tinted state. That is, at least 1% of the mitigated area 112 can at least partially tint when the electroactive device 100 is in a tinted state. In a more particular embodiment, at least 2% of the mitigated area 112 can tint, at least 3% of the mitigated area 112 can tint, at least 4% of the mitigated area 112 can display electroactivism, at least 5% of the mitigated area 112 can display electroactivism, at least 10% of the mitigated area 112 can display electroactivism, at least 15% of the mitigated area 112 can display electroactivism, at least 20% of the mitigated area 112 can display electroactivism, at least 25% of the mitigated area 112 can display electroactivism, at least 50% of the mitigated area 112 can display electroactivism, or at least 75% of the mitigated area 112 can display electroactivism. In a further embodiment, the entire mitigated area 112 can display electroactivism when the electroactive device 100 is in a tinted state.

The shape of the mitigated area 112 can affect the tint gradient. Referring to FIG. 2, the mitigated area 112 can define a generally oblong shape when viewed normal to a major surface of the stack 102. More particularly, the mitigated area 112 can be circular, or generally circular, when viewed normal to the major surface of the stack 102. In certain embodiments, mitigated areas 112 with curvilinear or linear perimeters can be formed in the stack 102. The tint gradient can be affected by angles and unevenly curved segments, resulting in a non-rotationally symmetrical tint gradient.

Referring again to FIG. 1, the first electrode 104 defines a surface 122 abutting the mitigated area 112. The surface 122 extends around the perimeter of the mitigated area 112. In the present invention, the surface 122 has a non-linear profile and can include a tapered, curved, or multi-segmented portion, such as adjacent to the lower surface 116.

In a particular instance, a tint time of the electroactive device 100 is greater in the mitigated area 112 as compared to an area of the electroactive device 100 adjacent to the mitigated area 112. As used herein, "tint time" can refer to a duration of time corresponding with a transition from a first tinted state to a second tinted state. In an embodiment, the tint time of the mitigated area 112 is 101% the tint time of the remaining electroactive device 100, at least 105% the tint time of the remaining electroactive device 100, at least 110% the tint time of the remaining electroactive device 100, or at least 120% the tint time of the remaining electroactive device 100. In another embodiment, the tint time of the mitigated area 112 is no greater than 1000% the tint time of the remaining electroactive device 100 or no greater than 500% the tint time of the remaining electroactive device 100.

The first electrode 104 can be coupled with a first bus bar (not illustrated). The second electrode 106 can be coupled with a second bus bar (not illustrated). The first and second bus bars can be used to affect tinting and bleaching of the electroactive device 100. In an embodiment, the mitigated area 112 can be spaced apart from at least one, such as both, of the first and second bus bars of the electroactive device 100. In another embodiment, the mitigated area 112 can be spaced apart from an edge of the electroactive device 100. In a more particular embodiment, the mitigated area 112 can be spaced apart from an edge of a functional portion of the electroactive device 100. In the present invention, the mitigated area 112 is entirely surrounded by functional portions of the electroactive device 100. More specifically, the mitigated area 112 is entirely surrounded by tintable portions of the electroactive device 100.

In an embodiment, the stack 102 can overly a substrate (not illustrated). In an embodiment, the first electrode 104 is closer to the substrate than the second electrode 106. In another embodiment, the second electrode 106 is closer to the substrate than the first electrode 104. That is, the substrate can be disposed on either side of the stack 102.

In an embodiment, the substrate can include a glass substrate, a sapphire substrate, an aluminum oxynitride substrate, or a spinel substrate. In another embodiment, the substrate can include a transparent polymer, such as a polyacrylic compound, a polyalkene, a polycarbonate, a polyester, a polyether, a polyethylene, a polyimide, a polysulfone, a polysulfide, a polyurethane, a polyvinylacetate, another suitable transparent polymer, or a copolymer of the foregoing. The substrate may or may not be flexible. In a particular embodiment, the substrate can be float glass or a borosilicate glass and have a thickness in a range of 0.5 mm to 4 mm thick. In another particular embodiment, the substrate can include ultra-thin glass that is a mineral glass having a thickness in a range of 50 microns to 300 microns. In a particular embodiment, the substrate may be used for many different non-light-emitting variable transmission devices being formed and may referred to as a motherboard.

In an embodiment, at least one of the first and second electrodes 104 and 106 can include a conductive metal oxide or a conductive polymer. Examples can include a tin oxide or a zinc oxide, either of which can be doped with a trivalent element, such as Al, Ga, In, or the like, a fluorinated tin oxide, or a sulfonated polymer, such as polyaniline, polypyrrole, poly(3,4-ethylenedioxythiophene), or the like. In another embodiment, at least one of the first and second electrodes 104 and 106 can include gold, silver, copper, nickel, aluminum, or any combination thereof. The first and second electrodes 104 and 106 can have the same or different compositions and the same or different thicknesses as compared to one another.

In an embodiment, the electroactive layer 108 can include an inorganic metal oxide electrochemically active material, such as WO₃, V₂O₅, MoO₃, Nb₂O₅, TiO₂, CuO, Ir₂O₃, Cr₂O₃, Co₂O₃, Mn₂O₃, or any combination thereof and have a thickness in a range of 50 nm to 2000 nm. The ion storage layer 110 can include any of the materials listed with respect to the electroactive layer or Ta₂O₅, ZrO₂, HfO₂, Sb₂O₃, or any combination thereof, and may further include nickel oxide (NiO, Ni₂O₃, or combination of the two), and Li, Na, H, or another ion and have a thickness in a range of 80 nm to 500 nm. An ion conductive layer (not illustrated and also referred to as an electrolyte layer) can disposed between the first and second electrodes 104 and 106, and can have a thickness in a range of 20 microns to 60 microns. The ion conductive layer allows ions to migrate therethrough and does not allow a significant number of electrons to pass therethrough. The ion conductive layer can include a silicate with or without lithium, aluminum, zirconium, phosphorus, boron; a borate with or without lithium; a tantalum oxide with or without lithium; a lanthanide-based material with or without lithium; another lithium-based ceramic material; or the like. The ion conductive layer is optional and, when present, may be formed by deposition or, after depositing the other layers, reacting portions of two different layers, such as the first and second electrodes 104 and 106, to form the ion conductive layer. After reading this specification, skilled artisans will appreciate that other compositions and thicknesses for the layers 104, 106, 108, and 110 can be used without departing from the scope of the concepts described herein.

In an embodiment, the device 100 can include an antireflective layer (not illustrated) to help reduce reflection. The antireflective layer can have an index of refraction between the underlying layers (refractive index of the underlying layers can be approximately 2.0) and clean, dry air or an inert gas, such as Ar or N₂ (many gases have refractive indices of approximately 1.0). In an embodiment, the antireflective layer has a refractive index in a range of 1.4 to 1.6. The antireflective layer can include an insulating material having a suitable refractive index. In a particular embodiment, the antireflective layer includes silica.

In an embodiment, a barrier layer (not illustrated) can be formed over the stack 102. The barrier layer helps to keep an interlayer from contacting any of the layers exposed within a void, such as the first electrode layer 104. The barrier layer can include an electrically insulating layer. The barrier layer can include an oxide, a nitride, or an oxynitride. In a particular embodiment, the barrier layer can include SiOx, SiNx, SiOxNy, AlOx, TiOx, TiNx, TiOxNy, or any combination thereof. For the oxides and nitrides, x can represent a stoichiometric value or a value within 50% of the stoichiometric value, and for the oxynitrides, x and y can be selected to achieve a desired refractive index. In an embodiment, the barrier layer has a thickness of at least 10 nm, at least 12 nm, or at least 15 nm, and in another embodiment, the barrier layer 500 has a thickness of at most 90 nm, at most 70 nm, or at most 50 nm. The barrier layer can be formed using sol gel process, a spin-on coating, atomic layer deposition, or the like. In a particular embodiment, a directional deposition method, such as physical vapor deposition, plasma enhanced chemical vapor deposition, etc. may not be used, as the interlayer may contact a layer along a sidewall of a void.

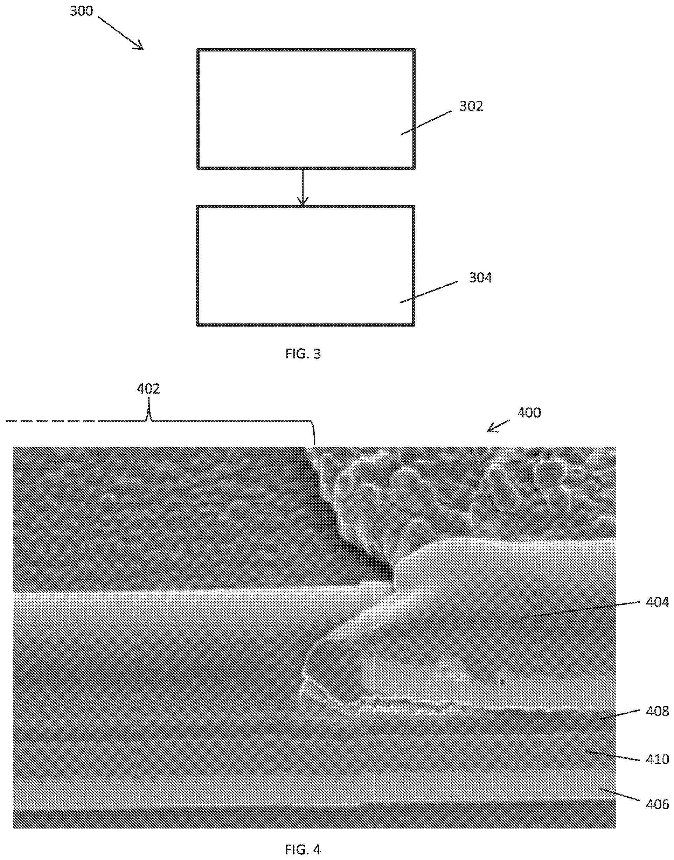

A flow chart illustrating a method 300 of repairing an electroactive device in accordance with an embodiment is illustrated in FIG. 3. In In the present invention, the method includes locating 302 a defect in the electroactive device and removing 304 the first electrode from a stack of the electroactive device at a location corresponding with the defect such that a resulting mitigated area corresponding with the location of the defect is essentially free of material corresponding with the first electrode. The electroactive layer and second electrode of the stack remain functional within the mitigated area after removing 304 the first electrode from the stack.

In an embodiment, locating 302 the defect can occur through visual inspection. For example, the defect may be visible to the human eye or with the use of one or more tools or systems. In another embodiment, locating 302 the defect can be performed with an equipment.

In an embodiment, removing 304 the first electrode can be performed with a full spectrum laser. In a more particular embodiment, the laser is operated with pulse duration between 200 fs and 1500 fs, between 250 fs and 1250 fs, or between 300 fs and 1000 fs. Use of a short laser pulse can prevent heat generation and buildup within the electroactive layer 108 or ion storage layer 110. Use of a short laser pulse can prevent intermixing or melting between the first electrode 104, the electroactive layer 108, and the ion storage layer 110, thereby maintaining the mitigated area 112 in a functional state.

In the present invention, the laser is operated with a wavelength between 450 nm and 600 nm, preferably between 500 nm and 550 nm, or between 510 nm and 525 nm. In a more particular embodiment, the laser is operated with a wavelength of approximately 515 nm.

In an embodiment, the laser is operated at a same pulse duration during the entire removal 304 step. In another embodiment, the laser is operated at a same wavelength during the entire removal 304 step. In a different embodiment, the laser can be operated with a variable pulse duration, a variable wavelength, or a combination thereof.

In an embodiment, the laser can be used on either the first or second electrodes to form the mitigated area. In instances where the stack 102 overlies a substrate and repair is necessary on the electrode closer to the substrate, the laser can be applied to the first or second electrode through the substrate. Removal of the stack 102 from the substrate may not be required for repairing the defect in accordance with an embodiment described herein.

After removing 304 the first electrode, the electroactive device can be operatively switched between a bleached state and a tinted state or between two or more tinted states. In certain instances, operation of the electroactive device can create a tint gradient in the mitigated area.

FIG. 4 illustrates a Scanning Electron Microscope (SEM) image of an electroactive device 400 with a portion of a mitigated area 402 in accordance with an embodiment. The electroactive device includes a first electrode 404 and a second electrode 406 spaced apart from one another by an electroactive layer 408 and an ion storage layer 410. As illustrated, the mitigated area 402 includes the second electrode 406, the electroactive layer 408, and the ion storage layer 410. The electroactive device 400 2. is essentially free of the first electrode 404. Further, the mitigated area 402 can correspond with a functional area, as previously described, of the electroactive device 400.

The mitigated area 402 is illustrated partially in FIG. 4 and continues to the left beyond the illustrated image. As illustrated, the surface 122 of the first electrode 404 is non-linear as a result of laser operations therealong to remove the first electrode 404 within the mitigated area 402.

Many other embodiments may be apparent to skilled artisans only after reading this specification. Other embodiments may be used and derived from the disclosure, such that a structural substitution, logical substitution, or another change may be made without departing from the scope of the present invention as defined in the appended claims. Accordingly, the disclosure is to be regarded as illustrative rather than restrictive.

## Claims

1. An electroactive device (100), which is switchable between a bleached state and a tinted state or between two or more tinted states, comprising:
a stack (102) comprising:
a first electrode (104) and a second electrode (106); and
an electroactive layer (108) disposed between the first (104) and second electrodes (106),
wherein the stack (102) comprises a mitigated area (112) essentially free of material corresponding with the first electrode (104), and wherein at least a portion of the second electrode (106) and electroactive layer (108), as contained in the mitigated area (112), are functional,
the mitigated area (112) being the result of removing the first electrode (104) from the stack,
wherein the mitigated area (112) is entirely surrounded by tintable functional portions of the electroactive device (100),
wherein the first electrode (104) has a surface (122) abutting the mitigated area (112), and
wherein the surface (122) has a non-linear profile.

2. The electroactive device (100) of claim 1, wherein an entire area of the second electrode (106) and electroactive layer (108), as measured in the mitigated area (112), are functional.

3. The electroactive device (100) of claim 1, wherein the mitigated area (112) defines a perimeter, and wherein a current flow path (118) between the first (104) and second electrodes (106) passes through the perimeter of the mitigated area (112).

4. The electroactive device (100) of any one of the preceding claims, wherein a current flow path (118) between the first (104) and second electrodes (106) within the mitigated area (112) is angularly offset from a direction normal with the stack (102).

5. The electroactive device (100) of claim 4, wherein the angular offset is at least 0.5°.

6. The electroactive device (100) of claim 1, wherein the mitigated area (112) defines a tint gradient when the electroactive device (100) is in a tinted state.

7. The electroactive device (100) of claim 6, wherein the tint gradient defines a minimum tint and a maximum tint, and wherein the minimum tint is disposed closer to a central region (120) of the mitigated area (112) as compared to the maximum tint.

8. The electroactive device (100) of claim 1, wherein the first electrode (104) is electrically coupled with a first bus bar and the second electrode (106) is electrically coupled with a second bus bar.

9. A method of repairing an electroactive device (100), which is switchable between a bleached state and a tinted state or between two or more tinted states, comprising:
locating a defect in the electroactive device (100); and
removing a first electrode (104) from a stack (102) of the electroactive device (100) at a location corresponding with the defect such that a resulting mitigated area (112) corresponding with the location of the defect is essentially free of material corresponding with the first electrode (104), and wherein an electroactive layer (108) and second electrode (106) of the stack (102) remain functional within the mitigated area (112),
wherein the mitigated area (112) is entirely surrounded by tintable functional portions of the electroactive device (100),
wherein removing the first electrode (104) is performed with a laser, wherein the laser is operated with a wavelength between 450 nm and 600 nm.

## Patentansprüche

1. Elektroaktive Vorrichtung (100), die zwischen einem entfärbten Zustand und einem getönten Zustand oder zwischen zwei oder mehr getönten Zuständen umschaltbar ist, umfassend:
einen Stapel (102), umfassend:
eine erste Elektrode (104) und eine zweite Elektrode (106); und
eine elektroaktive Schicht (108), die zwischen der ersten (104) und der zweiten Elektrode (106) angeordnet ist,
wobei der Stapel (102) einen abgeschwächten Bereich (112) umfasst, der im Wesentlichen frei von Material ist, das der ersten Elektrode (104) entspricht, und wobei mindestens ein Abschnitt der zweiten Elektrode (106) und der elektroaktiven Schicht (108), wie in dem abgeschwächten Bereich (112) enthalten, funktionsfähig sind,
wobei der abgeschwächte Bereich (112) das Resultat eines Entfernens der ersten Elektrode (104) von dem Stapel ist,
wobei der abgeschwächte Bereich (112) vollständig von tönbaren funktionalen Abschnitten der elektroaktiven Vorrichtung (100) umgeben ist,
wobei die erste Elektrode (104) eine Oberfläche (122) aufweist, die an den abgeschwächten Bereich (112) angrenzt, und
wobei die Oberfläche (122) ein nichtlineares Profil aufweist.

2. Elektroaktive Vorrichtung (100) nach Anspruch 1, wobei ein gesamter Bereich der zweiten Elektrode (106) und der elektroaktiven Schicht (108), wie in dem abgeschwächten Bereich (112) gemessen, funktionsfähig ist.

3. Elektroaktive Vorrichtung (100) nach Anspruch 1, wobei der abgeschwächte Bereich (112) einen Umfang definiert und wobei ein Stromflusspfad (118) zwischen der ersten (104) und der zweiten Elektrode (106) durch den Umfang des abgeschwächten Bereichs (112) verläuft.

4. Elektroaktive Vorrichtung (100) nach einem der vorstehenden Ansprüche, wobei ein Stromflusspfad (118) zwischen der ersten (104) und der zweiten Elektrode (106) innerhalb des abgeschwächten Bereichs (112) gegenüber einer Normalrichtung zu dem Stapel (102) winkelversetzt ist.

5. Elektroaktive Vorrichtung (100) nach Anspruch 4, wobei der Winkelversatz mindestens 0,5° beträgt.

6. Elektroaktive Vorrichtung (100) nach Anspruch 1, wobei der abgeschwächte Bereich (112) einen Farbtongradienten definiert, wenn sich die elektroaktive Vorrichtung (100) in einem getönten Zustand befindet.

7. Elektroaktive Vorrichtung (100) nach Anspruch 6, wobei der Farbtongradient einen minimalen Farbton und einen maximalen Farbton definiert, und wobei der minimale Farbton näher an einer zentralen Region (120) des abgeschwächten Bereichs (112) als der maximale Farbton angeordnet ist.

8. Elektroaktive Vorrichtung (100) nach Anspruch 1, wobei die erste Elektrode (104) mit einer ersten Sammelschiene elektrisch gekoppelt ist und die zweite Elektrode (106) mit einer zweiten Sammelschiene elektrisch gekoppelt ist.

9. Verfahren zum Reparieren einer elektroaktiven Vorrichtung (100), die zwischen einem entfärbten Zustand und einem getönten Zustand oder zwischen zwei oder mehr getönten Zuständen umschaltbar ist, umfassend:
Lokalisieren eines Defekts in der elektroaktiven Vorrichtung (100); und
Entfernen einer ersten Elektrode (104) von einem Stapel (102) der elektroaktiven Vorrichtung (100) an einer Stelle, die dem Defekt entspricht, sodass ein resultierender abgeschwächter Bereich (112), der der Stelle des Defekts entspricht, im Wesentlichen frei von Material ist, das der ersten Elektrode (104) entspricht, und wobei eine elektroaktive Schicht (108) und eine zweite Elektrode (106) des Stapels (102) innerhalb des abgeschwächten Bereichs (112) funktionsfähig bleiben,
wobei der abgeschwächte Bereich (112) vollständig von tönbaren funktionalen Abschnitten der elektroaktiven Vorrichtung (100) umgeben ist,
wobei das Entfernen der ersten Elektrode (104) mit einem Laser durchgeführt wird, wobei der Laser mit einer Wellenlänge zwischen 450 nm und 600 nm betrieben wird.

## Revendications

1. Dispositif électroactif (100), qui est commutable entre un état blanchi et un état teinté ou entre deux ou plusieurs états teintés, comprenant :
un empilement (102) comprenant :
une première électrode (104) et une seconde électrode (106) ; et
une couche électroactive (108) disposée entre la première (104) et la seconde électrode (106),
dans lequel l'empilement (102) comprend une zone atténuée (112) essentiellement exempte de matériau correspondant à la première électrode (104), et dans lequel au moins une partie de la seconde électrode (106) et de la couche électroactive (108), telle que contenue dans la zone atténuée (112), est fonctionnelle,
la zone atténuée (112) étant le résultat du retrait de la première électrode (104) de l'empilement,
dans lequel la zone atténuée (112) est entièrement entourée de parties fonctionnelles teintables du dispositif électroactif (100),
dans lequel la première électrode (104) a une surface (122) venant en contact avec la zone atténuée (112), et
dans lequel la surface (122) a un profil non linéaire.

2. Dispositif électroactif (100) selon la revendication 1, dans lequel une zone entière de la seconde électrode (106) et de la couche électroactive (108), telle que mesurée dans la zone atténuée (112), est fonctionnelle.

3. Dispositif électroactif (100) selon la revendication 1, dans lequel la zone atténuée (112) définit un périmètre, et dans lequel une voie de circulation de courant (118) entre la première (104) et la seconde électrode (106) passe par le périmètre de la zone atténuée (112).

4. Dispositif électroactif (100) selon l'une quelconque des revendications précédentes, dans lequel une voie de circulation du courant (118) entre la première (104) et la seconde électrode (106) dans la zone atténuée (112) est décalée angulairement par rapport à une direction normale à l'empilement (102).

5. Dispositif électroactif (100) selon la revendication 4, dans lequel le décalage angulaire est d'au moins 0,5 °.

6. Dispositif électroactif (100) selon la revendication 1, dans lequel la zone atténuée (112) définit un gradient de teinte lorsque le dispositif électroactif (100) est dans un état teinté.

7. Dispositif électroactif (100) selon la revendication 6, dans lequel le gradient de teinte définit une teinte minimale et une teinte maximale, et dans lequel la teinte minimale est disposée plus près d'une région centrale (120) de la zone atténuée (112) par rapport à la teinte maximale.

8. Dispositif électroactif (100) selon la revendication 1, dans lequel la première électrode (104) est couplée électriquement à une première barre omnibus et la seconde électrode (106) est couplée électriquement à une seconde barre omnibus.

9. Procédé de réparation d'un dispositif électroactif (100), qui est commutable entre un état blanchi et un état teinté ou entre deux ou plusieurs états teintés, comprenant :
la localisation d'un défaut dans le dispositif électroactif (100) ; et
le retrait d'une première électrode (104) d'un empilement (102) du dispositif électroactif (100) à un endroit correspondant au défaut, de sorte qu'une zone atténuée (112) correspondant à l'emplacement du défaut est essentiellement exempte de matériau correspondant à la première électrode (104), et dans lequel une couche électroactive (108) et une seconde électrode (106) de l'empilement (102) restent fonctionnelles à l'intérieur de la zone atténuée (112),
dans lequel la zone atténuée (112) est entièrement entourée de parties fonctionnelles teintables du dispositif électroactif (100),
dans lequel l'élimination de la première électrode (104) est effectuée à l'aide d'un laser, dans lequel le laser fonctionne avec une longueur d'onde comprise entre 450 nm et 600 nm.
